(19) Europäisches Patentamt
European Patent Office
Office européen des brevets

(11) **EP 2 881 262 A1**

(12) **DEMANDE DE BREVET EUROPEEN**

(43) Date de publication:
**10.06.2015 Bulletin 2015/24**

(51) Int Cl.:
**B60B 37/10** *(2006.01)*     **A47L 9/00** *(2006.01)*
**B60B 33/00** *(2006.01)*

(21) Numéro de dépôt: **14195514.6**

(22) Date de dépôt: **28.11.2014**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **03.12.2013   FR 1362045**

(71) Demandeur: **SEB S.A.**
**69130 Ecully (FR)**

(72) Inventeur: **Frot, Donatien**
**27200 Vernon (FR)**

(74) Mandataire: **Cémeli, Eric Philippe Laurent**
**SEB Développement**
**Service Propriété Industrielle**
**Les 4 M - Chemin du Petit Bois**
**B.P. 172**
**69134 Ecully Cedex (FR)**

(54) **Assemblage de roue de suceur**

(57)     Assemblage de roue de suceur (10) d'aspirateur comprenant :
- une roue de suceur (10) avec une structure porteuse (111) de roue,
- un moyeu avec une structure porteuse (121) de moyeu, agencée pour former une liaison pivot avec la roue de suceur (10),
- des moyens de fixation agencés pour retenir la roue de suceur (10) sur le moyeu selon une direction axiale de pivotement de la roue de suceur (10), caractérisé en ce que l'assemblage de roue de suceur (10) comprend des moyens de rattrapage de jeu, agencés pour rattraper un jeu axial entre la roue de suceur (10) et le moyeu, et en ce que les moyens de rattrapage de jeu sont une portion déformable de l'une de la structure porteuse (111) de roue ou de la structure porteuse (121) de moyeu, agencée pour être déformée élastiquement lorsque la roue de suceur (10) est retenue sur le moyeu.

Fig. 1

Fig. 2b

**Description**

La présente invention concerne de manière générale une roue de suceur d'aspirateur.

Il est connu dans l'art antérieur de monter des roues de suceur d'aspirateur en liaison pivot avec le suceur d'aspirateur. Une telle liaison pivot est généralement réalisée par le clipsage de la roue sur son moyeu. Cependant ce montage nécessite de prévoir des jeux notamment axiaux qui peuvent générer des bruits lors des virages très serrés imposés au suceur d'aspirateur. En effet, lors de ces virages, la roue de suceur peut se mettre à vibrer, ce qui dégrade fortement la qualité perçue du produit. De plus, de tels frottements peuvent provoquer une usure des portées de guidage et des pattes de clipsage, ce qui augmente le jeu axial et le phénomène de vibration, et peut même conduire au détachement de la roue de suceur.

Un but de la présente invention est de répondre aux inconvénients de l'art antérieur mentionnés ci-dessus et en particulier, tout d'abord, de proposer un assemblage de roue de suceur d'aspirateur qui limite le phénomène de vibration et de bruit de la roue de suceur lors de son roulage.

Pour cela un premier aspect de l'invention concerne un assemblage de roue de suceur d'aspirateur comprenant :

- une roue de suceur avec une structure porteuse de roue,
- un moyeu avec une structure porteuse de moyeu, agencée pour former une liaison pivot avec la roue de suceur,
- des moyens de fixation agencés pour retenir la roue de suceur sur le moyeu selon une direction axiale de pivotement de la roue de suceur,

caractérisé en ce que l'assemblage de roue de suceur comprend des moyens de rattrapage de jeu, agencés pour rattraper un jeu axial entre la roue de suceur et le moyeu, et en ce que les moyens de rattrapage de jeu sont une portion déformable de l'une de la structure porteuse de roue ou de la structure porteuse de moyeu, agencée pour être déformée élastiquement lorsque la roue de suceur est retenue sur le moyeu. L'assemblage selon la présente invention réduit le risque de mise en vibration de la roue de suceur, car les moyens de rattrapage de jeu sont agencés pour rattraper le jeu axial de la roue de suceur sur le moyeu. En d'autres termes, la roue de suceur est constamment plaquée sur le moyeu par les moyens de rattrapage de jeu, pour l'empêcher de coulisser sur le moyeu, même lorsqu'un effort axial dû à un virage s'exerce sur la roue. Le bruit lors des virages serrés est donc limité.

Selon un mode de réalisation, les moyens de rattrapage de jeu comprennent au moins une patte flexible faisant partie de l'une de la structure porteuse de roue ou de la structure porteuse de moyeu. Une patte selon la présente mise en oeuvre procure une grande course, tout en limitant les déformations sur la matière.

Selon un mode de réalisation, les moyens de rattrapage de jeu sont agencés pour se déformer en flexion lors de la fixation de la roue de suceur sur le moyeu, et pour exercer un effort continu de rattrapage de jeu.

Selon un mode de réalisation, au moins l'une de la structure porteuse de roue ou de la structure porteuse de moyeu est fabriquée par moulage, et les moyens de rattrapage de jeu sont une partie moulée de l'une de la structure porteuse de roue ou de la structure porteuse de moyeu. En d'autres termes, les moyens de rattrapage de jeu sont réalisés dans la même matière que la structure dont ils font partie (celle de la roue ou du moyeu), et sans étape d'assemblage, puisque c'est une partie moulée de cette structure. En d'autres termes, il y a une continuité de matière entre les moyens de rattrapage de jeu et la structure porteuse dont ils font partie. La fonction de rattrapage de jeu est intégrée aux composants du suceur, il n'y a pas d'assemblage spécifique à prévoir.

Selon un mode de réalisation, les moyens de fixation sont des moyens de clipsage retenant la roue par une mise en butée d'au moins une patte de clipsage sur une première surface, et les moyens de rattrapage de jeu sont agencés pour pousser la roue de suceur contre une deuxième surface, de sorte à obtenir un jeu positif entre ladite au moins une patte de clipsage et la première surface. Selon cette mise en oeuvre, la roue ne frotte pas contre les pattes de clipsage (qui ont une définition peu précise entre elles du fait de leur élasticité), mais contre une deuxième surface spécialement dédiée qui sera plus à même de respecter les contraintes de frottement (continuité, état de surface). Cette mise en oeuvre permet en outre de réaliser les moyens de fixation dans une première matière adaptée au clipsage (élasticité, résistance mécanique...), et la deuxième surface dans une seconde matière dédiée au frottement (rugosité, coefficient de frottement faible). On peut envisager de réaliser la structure porteuse en acrylonitrile butadiène styrène, ou ABS, et la deuxième surface pourrait être formée dans un insert en poly-acétal tel que du polyoxyméthylène (ou polyformaldéhyde), de sigle POM.

Selon un mode de réalisation, la deuxième surface est une surface continue comprenant au moins une cavité de piégeage de poussières. L'influence de l'encrassement est réduite avec des pièges à poussières, tels que des rainures par exemple.

Selon un mode de réalisation, l'un de la roue de suceur ou du moyeu comprend une rainure radiale, et l'autre de la roue de suceur ou du moyeu comprend au moins un index agencé pour s'engager dans la rainure radiale, les moyens de fixation étant formés par la rainure radiale et ledit au moins un index. Les moyens de fixation selon cette mise en oeuvre sont robustes et présentent un coût d'outillage réduit.

Selon un mode de réalisation, le moyeu est formé par au moins deux pièces distinctes agencées pour se clipper l'une sur l'autre, après le montage de la roue de suceur sur l'une d'entre elles.

Selon un mode de réalisation, les moyens de rattrapage de jeu sont agencés pour exercer un effort au niveau du centre de rotation de la roue de suceur. Les moyens de rattrapage de jeu selon cette mise en oeuvre limitent les risques de blocage de la roue lors de son roulage sur le sol à nettoyer.

Selon un mode de réalisation, les moyens de rattrapage de jeu comprennent :

- au moins une gorge radiale agencée sur l'un de la roue de suceur ou du moyeu,
- au moins une patte flexible agencée sur l'autre de la roue de suceur ou du moyeu, pour glisser sur ladite au moins une gorge radiale et y appliquer un effort avec au moins une composante axiale opposée à une direction de retenue des moyens de fixation.

Selon un mode de réalisation, les moyens de rattrapage de jeu comprennent :

- au moins une face d'appui axiale agencée sur l'un de la roue de suceur ou du moyeu,
- au moins une patte flexible agencée sur l'autre de la roue de suceur ou du moyeu, pour glisser sur ladite au moins une face d'appui axiale et y appliquer un effort avec au moins une composante axiale opposée à une direction de retenue des moyens de fixation.

Selon un mode de réalisation, le moyeu comprend :

- un corps de moyeu solidaire du suceur,
- un support amovible agencé pour se fixer de manière amovible sur le corps de moyeu,

et le corps de moyeu et le support amovible sont agencés pour prendre la roue de suceur en sandwich lorsque le support amovible est fixé sur le corps de moyeu.

Selon un mode de réalisation, le moyeu comprend des protubérances radiales agencées pour former un guidage radial de la roue de suceur. Cette mise en oeuvre permet de limiter les contraintes dimensionnelles concernées pour le guidage aux seules protubérances, et non à toute la périphérie qui porte les protubérances.

Un second aspect de l'invention est un suceur d'aspirateur comprenant au moins un assemblage de roue de suceur selon le premier aspect de l'invention.

Un troisième aspect de l'invention est un aspirateur comprenant au moins un assemblage de roue de suceur selon le premier aspect de l'invention.

D'autres caractéristiques et avantages de la présente invention apparaîtront plus clairement à la lecture de la description détaillée qui suit de trois variantes de réalisation de l'invention données à titre d'exemples nullement limitatifs et illustrés par les dessins annexés, dans lesquels :

- la figure 1 représente une vue isométrique d'une première variante d'un assemblage de roue de suceur en coupe, selon la présente invention ;

- les figures 2a et 2b représentent une deuxième variante de l'invention ;

- la figure 3 représente une troisième variante de l'invention ;

- la figure 4 représente des efforts qui s'appliquent sur une roue de suceur faisant partie d'un assemblage selon l'invention.

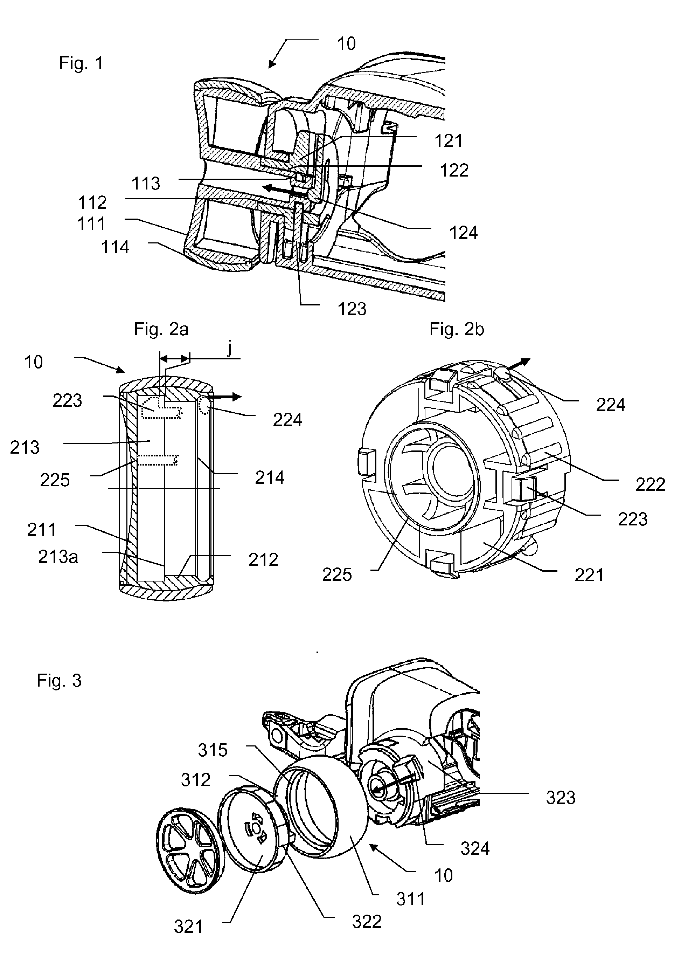

La figure 1 représente une roue de suceur 10 montée sur un moyeu. La roue de suceur 10 comprend une structure porteuse 111 autour de laquelle est monté un bandage de roue 114. La structure porteuse 111 de la roue de suceur 10 comprend un arbre central qui forme une portée mâle 112 et qui se termine par une rainure radiale 113.

Le moyeu comprend une structure porteuse 121 qui forme un alésage 122 agencé pour recevoir en rotation la portée mâle 112 de la roue de suceur 10, et former ainsi une liaison pivot pour la roue de suceur 10. Le moyeu comprend également un index 123 qui est agencé pour s'engager dans la rainure radiale 113 et former ainsi des moyens de fixation de la roue de suceur 10 sur le moyeu, suivant une direction axiale définie par l'axe de pivotement de la roue de suceur 10.

Enfin, la structure porteuse 121 du moyeu comprend une patte flexible 124 qui, lorsque la roue de suceur 10 est montée et retenue sur le moyeu comme représenté, exerce un effort axial constant sur la roue de suceur 10, pour rattraper tout jeu axial du montage pivot entre la roue de suceur 10 et le moyeu.

En effet, en raison des variations dimensionnelles de fabrication, il est impératif de prévoir un jeu axial entre la roue de suceur 10 et son moyeu, mais pour éviter toute mise en vibration de la roue de suceur 10, et particulièrement lors d'un virage imposé au suceur, la patte flexible 124 pousse constamment la roue de suceur 10 sur l'index 123 du moyeu, et toujours dans le même sens, ce qui empêche la roue de suceur 10 de coulisser le long de son axe de rotation, et limite tout bruit de vibration de la roue de suceur 10 lors de son roulage, même lors d'un virage.

On peut noter que le moyeu est réalisé en plusieurs pièces, une première qui comprend la structure porteuse 121, et une deuxième qui comporte l'index 123, qui peut par exemple être clipsée sur la première pièce du moyeu, lorsque la roue de suceur 10 est engagée dans l'alésage 122.

Les figures 2a et 2b représentent une deuxième variante de l'invention. La figure 2a représente une roue de suceur 10 en coupe comprenant une structure porteuse 211. La figure 2b représente en vue isométrique un moyeu associé à la roue de suceur 10 de la figure 2a. Le moyeu comprend une structure porteuse 221, et sur sa périphérie, des pattes de clipsage 223, des pattes flexibles 224 et des protubérances 222.

La structure porteuse 211 de la roue de suceur 10 comprend une cavité radiale 213 dans laquelle les pattes de clipsage 223 peuvent s'engager, comme le montrent les traits pointillés, pour former des moyens de retenue de la roue de suceur 10 sur le moyeu, en prenant appui sur une première surface 213a de la cavité radiale 213. Le guidage en rotation est assuré par les protubérances 222 qui guident une surface cylindrique femelle 212 de la roue de suceur 10. Ainsi, une liaison pivot est définie, et les moyens de fixation retiennent la roue de suceur 10 sur le moyeu.

Les pattes flexibles 224 s'engagent quant à elles dans une gorge radiale 214 de la roue de suceur 10 (comme le montrent les traits pointillés), et exercent sur cette dernière un effort constant vers la droite de la figure 2a, comme le montre la flèche. Cet effort est la résultante d'une déformation élastique par flexion des pattes flexibles 224 qui forment les moyens de rattrapage de jeu.

Sous l'effet de cet effort constant, la roue de suceur 10 est plaquée sur une deuxième surface 225 continue du moyeu, et un jeu j constant peut être constaté entre les pattes de clipsage 223 et la cavité radiale 213. Cela permet de garantir que le frottement entre la roue de suceur 10 et le moyeu se fait par l'intermédiaire de la deuxième surface 225, et non par un contact entre les pattes de clipsage 223 et la cavité radiale 213, les pattes de clipsage 223 étant dimensionnellement moins précises qu'une surface continue.

Comme pour la variante précédente, l'effet des moyens de rattrapage de jeu, les pattes flexibles 224, est de garantir que la roue de suceur 10 ne coulissera pas le long de son axe de rotation, et ce même pendant un virage imposé au suceur, ce qui permet de réduire les vibrations et le bruit lors du roulage.

La figure 3 représente une troisième variante de l'invention, où la roue de suceur 10 est prise en sandwich entre deux pièces du moyeu. Ce dernier est composé d'un corps de moyeu 323 comprenant des pattes flexibles 324 formant les moyens de rattrapage de jeu, et d'un support amovible 321 agencé pour se clipser dans le corps de moyeu 323. Le support amovible 321 comprend des protubérances 322 qui forment une surface de guidage pour un alésage 312 de la roue de suceur 10.

La roue de suceur 10 comprend une surface d'appui 315, formée dans une structure porteuse 311 de la roue de suceur 10, et qui est en contact avec le support amovible lorsque la roue de suceur 10 est montée sur le moyeu, et poussée par les pattes flexibles 324.

Ainsi, la roue de suceur 10 est constamment poussée par les pattes flexibles 324 qui forment les moyens de rattrapage de jeu, pour éviter toute vibration et nuisance sonore lors du roulage du suceur.

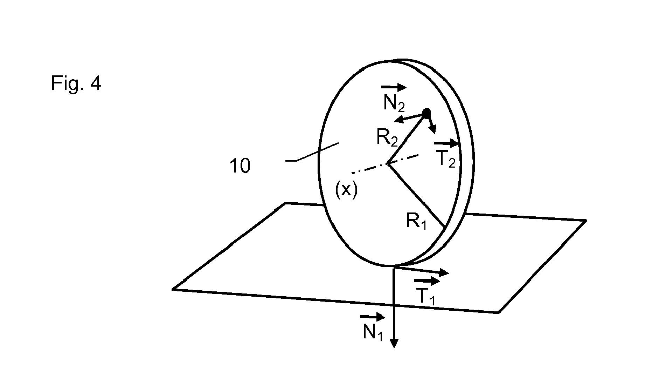

La figure 4 représente des efforts qui s'appliquent sur la roue de suceur 10 de rayon $R_1$, lorsqu'elle est montée sur le moyeu, avec les moyens de rattrapage de jeu qui la plaquent contre le moyeu.

Dans ce qui suit, on négligera les actions mécaniques autres que celles exercées sur la roue de suceur 10 par les moyens de rattrapage de jeu et le sol.

Au niveau des moyens de rattrapage de jeu, on considère dans cet exemple qu'ils n'exercent un effort de rattrapage de jeu $N_2$ que sur un seul point, situé à une distance $R_2$ de l'axe de rotation (x) de la roue de suceur 10. Comme il y a frottement à ce point, on peut écrire que la force de résistance $T_2$ au glissement est la suivante :

$$T_2 = f_2 . N_2 \ (1)$$

avec $f_2$ le coefficient de frottement au point d'application de la force de rattrapage de jeu, c'est-à-dire entre la structure porteuse de la roue de suceur 10 et la structure porteuse du moyeu.

La roue de suceur 10 supporte un poids du suceur et exerce un effort vertical $N_1$ sur le sol. Il y a adhérence de la roue de suceur 10 sur le sol sans glissement si la force $T_1$ normale à $N_1$ vérifie l'inégalité suivante :

$$T1 < f_1 . N_1 \ (2)$$

avec $f_1$ le coefficient de frottement entre la roue de suceur 10 et le sol.

Or, comme on a négligé les autres efforts sur la roue de suceur 10, on peut écrire que :

$$T_1 R_1 = T_2 R_2 \ (3)$$

Donc, en combinant les équations (1) et (3) :

$$T_1 = (N_2 . f_2 . R_2)/R_1 \ (4)$$

Et en combinant avec l'équation (2), on trouve que pour qu'il n'y ait pas blocage de la roue de suceur 10 sur le sol, il faut :

$$(N_2 . f_2 . R_2)/R_1 < f_1 . N_1 \ (5)$$

Donc, on obtient plusieurs possibilités de garantir que la roue de suceur 10 ne sera pas bloquée par les moyens de rattrapage de jeu.

On peut choisir le coefficient de frottement $f_2$ tel que :

$$f_2 < (f_1.N_1.R_1)/ (N_2.R_2), \quad (7)$$

si $f_1$ et $N_1$ et $R_1$ et $N_2$ et $R_2$ sont connus. Plus le coefficient de frottement $f_2$ entre la structure porteuse de roue et la structure porteuse de moyeu est faible, plus le risque de blocage sera limité.

On peut encore choisir de placer le point d'application de la force de rattrapage de jeu proche de l'axe de rotation :

$$R_2 < (f_1.N_1.R_1)/ (N_2.f_2), \quad (8)$$

si $f_1$ et $N_1$ et $R_1$ et $N_2$ et $f_2$ sont connus. Plus le point d'application de l'effort est proche du centre de rotation, plus le risque de blocage sera limité.

On peut encore envisager de limiter la valeur de la force de rattrapage de jeu :

$$N_2 < (f_1.N_1.R_1)/ (R_2.f_2), \quad (9)$$

si $f_1$ et $N_1$ et $R_1$ et $R_2$ et $f_2$ sont connus. Plus la force de rattrapage de jeu est faible, plus le risque de blocage sera limité. On peut adapter la forme des pattes flexibles, ou la résistance mécanique de la matière pour obtenir la force de rattrapage de jeu adéquate.

S'il y a plusieurs points d'application d'un effort de rattrapage de jeu, on peut conduire ce raisonnement pour chacun d'eux. De plus, on peut utiliser l'équation (5) pour choisir tout paramètre inconnu en fonction d'autres connus : on peut également jouer sur le rayon de la roue de suceur, sur son coefficient de frottement sur le sol par exemple.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Assemblage de roue de suceur (10) d'aspirateur comprenant :

   - une roue de suceur (10) avec une structure porteuse (111; 211; 311) de roue,
   - un moyeu avec une structure porteuse (121; 221; 321) de moyeu, agencée pour former une liaison pivot avec la roue de suceur (10),
   - des moyens de fixation agencés pour retenir la roue de suceur (10) sur le moyeu selon une direction axiale de pivotement de la roue de suceur (10), **caractérisé en ce que** l'assemblage de roue de suceur (10) comprend des moyens de rattrapage de jeu, agencés pour rattraper un jeu axial entre la roue de suceur (10) et le moyeu, et **en ce que** les moyens de rattrapage de jeu sont une portion déformable de l'une de la structure porteuse (111; 211; 311) de roue ou de la structure porteuse (121; 221; 321) de moyeu, agencée pour être déformée élastiquement lorsque la roue de suceur (10) est retenue sur le moyeu.

2. Assemblage de roue de suceur (10) selon la revendication précédente, dans lequel les moyens de rattrapage de jeu comprennent au moins une patte flexible (124; 224; 324) faisant partie de l'une de la structure porteuse (111 ; 211 ; 311) de roue ou de la structure porteuse (121 ; 221 ; 321) de moyeu.

3. Assemblage de roue de suceur (10) selon l'une des revendications précédentes, dans lequel les moyens de rattrapage de jeu sont agencés pour se déformer en flexion lors de la fixation de la roue de suceur (10) sur le moyeu, et pour exercer un effort continu de rattrapage de jeu.

4. Assemblage de roue de suceur (10) selon l'une des revendications précédentes, dans lequel au moins l'une de la structure porteuse (111 ; 211 ; 311) de roue ou de la structure porteuse (121 ; 221 ; 321) de moyeu est fabriquée par moulage, et dans lequel les moyens de rattrapage de jeu sont une partie moulée de l'une de la structure porteuse (111 ; 211 ; 311) de roue ou de la structure porteuse (121 ; 221 ; 321) de moyeu.

5. Assemblage de roue de suceur (10) selon l'une des revendications précédentes, dans lequel les moyens de fixation sont des moyens de clipsage retenant la roue par une mise en butée d'au moins une patte de clipsage (223) sur une première surface (213a), et dans lequel les moyens de rattrapage de jeu sont agencés pour pousser la roue de suceur (10) contre une deuxième surface (225), de sorte à obtenir un jeu positif entre ladite au moins une patte de clipsage (223) et la première surface (213a).

6. Assemblage de roue de suceur (10) selon la revendication précédente, dans lequel la deuxième surface (225) est une surface continue comprenant au moins une cavité de piégeage de poussières.

7. Assemblage de roue de suceur (10) selon l'une des revendications précédentes, dans lequel l'un de la roue de suceur (10) ou du moyeu comprend une rainure radiale (113), et l'autre de la roue de suceur (10) ou du moyeu comprend au moins un index (123) agencé pour s'engager dans la rainure radiale (113), les moyens de fixation étant formés par la rainure radiale (113) et ledit au moins un index (123).

**8.** Assemblage de roue de suceur (10) selon la revendication précédente, dans lequel le moyeu est formé par au moins deux pièces distinctes agencées pour se clipper l'une sur l'autre, après le montage de la roue de suceur (10) sur l'une d'entre elles.

**9.** Assemblage de roue de suceur (10) selon l'une des revendications précédentes, dans lequel les moyens de rattrapage de jeu sont agencés pour exercer un effort au niveau du centre de rotation de la roue de suceur (10).

**10.** Assemblage de roue de suceur (10) selon l'une des revendications 1 à 8, dans lequel les moyens de rattrapage de jeu comprennent :

- au moins une gorge radiale (214) agencée sur l'un de la roue de suceur (10) ou du moyeu,
- au moins une patte flexible (224) agencée sur l'autre de la roue de suceur (10) ou du moyeu, pour glisser sur ladite au moins une gorge radiale (214) et y appliquer un effort avec au moins une composante axiale opposée à une direction de retenue des moyens de fixation.

**11.** Assemblage de roue de suceur (10) selon l'une des revendications précédentes, dans lequel le moyeu comprend :

- un corps de moyeu (323) solidaire du suceur,
- un support amovible (321) agencé pour se fixer de manière amovible sur le corps de moyeu (323),
et dans lequel le corps de moyeu (323) et le support amovible (321) sont agencés pour prendre la roue de suceur (10) en sandwich lorsque le support amovible (321) est fixé sur le corps de moyeu (323).

**12.** Assemblage de roue de suceur (10) selon l'une des revendications précédentes, dans lequel le moyeu comprend des protubérances (222, 322) radiales agencées pour former un guidage radial de la roue de suceur (10).

**13.** Suceur d'aspirateur comprenant au moins un assemblage de roue de suceur (10) selon l'une des revendications précédentes.

**14.** Aspirateur comprenant au moins un assemblage de roue de suceur (10) selon l'une des revendications

1 à 12.

EP 2 881 262 A1

Fig. 1

10

121
122
113
112
124
111
114
123

Fig. 2a

10

223
213
225
214
211
213a
212
224
j

Fig. 2b

224
222
223
221
225

Fig. 3

315
312
311
321
322
323
324
10

7

Fig. 4

| Europäisches Patentamt<br>European Patent Office<br>Office européen des brevets | **RAPPORT DE RECHERCHE EUROPEENNE** | Numéro de la demande<br>EP 14 19 5514 |

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (IPC) |
|---|---|---|---|
| X<br><br><br>Y<br>A | DE 198 05 556 A1 (BOSCH SIEMENS<br>HAUSGERAETE [DE])<br>12 août 1999 (1999-08-12)<br>* colonne 2, ligne 10 - ligne 32; figure 2<br>* | 1,3-8,<br>13,14<br><br>11,12<br>10 | INV.<br>B60B37/10<br>A47L9/00<br>B60B33/00 |
| | ----- | | |
| X | DE 10 2008 040710 A1 (BSH BOSCH SIEMENS<br>HAUSGERAETE [DE])<br>28 janvier 2010 (2010-01-28)<br>* le document en entier * | 1,2,4,5,<br>9,13,14 | |
| | ----- | | |
| Y | EP 0 145 807 A1 (LEIFHEIT INTERNATIONAL<br>[DE]) 26 juin 1985 (1985-06-26)<br>* alinéa [0010] * | 11,12 | |
| | ----- | | |

| | DOMAINES TECHNIQUES<br>RECHERCHES (IPC) |
|---|---|
| | B60B<br>A47L |

Le présent rapport a été établi pour toutes les revendications

| Lieu de la recherche | Date d'achèvement de la recherche | Examinateur |
|---|---|---|
| Munich | 15 avril 2015 | Cipriano, Pedro |

**ANNEXE AU RAPPORT DE RECHERCHE EUROPEENNE**
**RELATIF A LA DEMANDE DE BREVET EUROPEEN NO.**

EP 14 19 5514

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-04-2015

| Document brevet cité au rapport de recherche | | Date de publication | Membre(s) de la famille de brevet(s) | | Date de publication |
|---|---|---|---|---|---|
| DE 19805556 | A1 | 12-08-1999 | AUCUN | | |
| DE 102008040710 | A1 | 28-01-2010 | AUCUN | | |
| EP 0145807 | A1 | 26-06-1985 | DE<br>EP | 3374191 D1<br>0145807 A1 | 03-12-1987<br>26-06-1985 |

EPO FORM P0460

Pour tout renseignement concernant cette annexe : voir Journal Officiel de l'Office européen des brevets, No.12/82